# EUROPEAN PATENT APPLICATION

(11) **EP 2 306 675 A1**
(43) Date of publication of application: **06.04.2011**
(21) Application number: 09290745.0
(22) Date of filing: 30.09.2009
(51) Int. Cl.: H04L 12/56

(54) **Progressive traffic policer for a telecommunication data packet network**

(71) Applicant: Alcatel Lucent, 75008 Paris (FR)
(72) Inventor: Van Leekwijck, Werner Adriaan Josephine, 2610 Antwerp (BE); Hublet, Christian, 9080 Lochristi (BE)
(74) Representative: Narmon, Gisèle Marie Thérèse

(57) **Abstract**

A progressive traffic policer used to configure the maximum tolerated resource usage or bandwidth of a data packet flow (IF) entering in a telecommunication data packet network. The traffic policer measures the current resource usage of the incoming data packet flow at predetermined time intervals and accordingly reduces, if possible, the current maximum tolerated resource usage value to a lower value. The maximum tolerated resource usage value or bandwidth level is preferably reduced when the measured bandwidth remains below the maximum value during several predetermined time intervals.

## Description

The present invention relates to a traffic policer adapted to configure to a predetermined resource usage value the maximum tolerated resource usage of a data packet flow entering in a telecommunication data packet network.

When a new flow of data packets is coming up in the telecommunication network, an admission control function will decide to admit or reject the new flow. Such admission control function may for instance be based on fixed reservations in the network and assumed statistical averages. Alternatively, the admission control for a new flow may be based on measurements, e.g. on available resources, in which case the actual measured traffic in the network is taken into account to admit or reject a new flow. When there are sufficient resources available, generally based on the measured bandwidth usage, the admission control function will allow the new flow.

When a new flow of data packets is admitted in the telecommunication network, the resources that will be used by this new flow are configured, e.g. limited, by the traffic policer. To this end, today's traffic policers are initialized with a certain set of parameters thereby configuring a maximum tolerated resource usage of a data packet flow at the set-up time of the new session to a predetermined resource usage value. This value of the maximum tolerated resource usage remains untouched until the traffic policer's function is removed, e.g. at the end of the session.

A first drawback of this known solution is that the traffic parameters or resource usage for the session must be known to allow the traffic policer to configure the maximum tolerated resource usage. This is an issue in the delivery of services which do not signal the traffic parameters to the network. A practical example is offering guarantees for the delivery of over-the-top services.

A second drawback is that, if a session requires progressively less resources as time progresses, the traffic policer would have to be set with an initial high resource usage value, and keep this high value configuration until the end of the session. This leads to an inefficient use of the network resources.

A third drawback is that, in Measurement Based Access Control MBAC system, an admitted session, say S, operating for a long duration at significant lower resource usage values than its initial maximum tolerated resource usage value, will yield wrong measurements. As such the admission control function of the telecommunication network could allow new sessions that shouldn't be allowed. Indeed, the session S can later send again at its high authorized or tolerated rate leading to congestion and service degradation for the admitted flows. Only via providing sufficient resource usage headroom, i.e. in the worst case, to deal with the expected variability of the traffic aggregate, the problem can be solved. This leads to an underutilization of the available resources of the network.

Only for the second and third mentioned drawback, a static approach could be used to partially solve the problem. However, this approach still results in an underutilization of the available bandwidth.

An object of the present invention is to provide a traffic policer of the above known type but whose function will allow a better use of the traffic resources in the telecommunication data packet network.

According to the invention, this object is achieved due to the fact that said traffic policer is adapted to measure the current resource usage of said data packet flow and to reduce said predetermined resource usage value to a new predetermined resource usage value, lower than the first mentioned predetermined resource usage value, when the measured resource usage is below said maximum tolerated resource usage.

In this way, the traffic policer gradually decreases the value of the maximum tolerated resource usage if the traffic flowing through it is lower than what it is configured to allow at the current time. To keep the original resource usage settings, the source, at the Customer Premise Equipment CPE, should also regularly send at this maximum rate, otherwise the value of the resource usage is adapted, i.e. decreased.

As a result, the traffic policer is changed from a fairly static element to a dynamic element assuming that the CPE is not sending more/ faster than the network is expecting.

In a preferred characterizing embodiment of the present invention, said traffic policer is adapted to measure said resource usage at predetermined time intervals and to reduce the predetermined resource usage value when the measured resource usage remains below said maximum tolerated resource usage during a plurality of said predetermined time intervals.

In this way, the parameters, i.e. the tolerated value of resource usage, of the traffic policer are a dynamic property that can evolve over time.

Another characterizing embodiment of the present invention is that said traffic policer is further adapted to determine the amount of resource usage by which the predetermined resource usage value has to be reduced.

Such an adaptive mechanism leads to an optimal utilization of the available bandwidth in the network.

Also another characterizing embodiment of the present invention is that said traffic policer comprises measurement means adapted to measure said current resource usage of the data packet flow and a police flow controller coupled to said measurement means and adapted to limit the resource usage of said data packet flow to said new predetermined resource usage value.

Still another characterizing embodiment of the present invention is that said traffic policer further comprises resource usage setting means adapted to receive said measured resource usage from said measurement means, to calculate said new predetermined resource usage value according to said measured resource usage and to provide said new predetermined resource usage value to said police flow controller.

Yet another characterizing embodiment of the present invention is that said resource usage setting means is further adapted to receive the predetermined resource usage value of said maximum tolerated resource usage from a Customer Premise Equipment CPE generating said data packet flow.

This feature allows the support of guaranteed "over-the-top" services when the traffic spec is not known and allows for an optimal utilization of the network.

Also other services now receive a better QOS whereby they bring added value to the operator.

More generally, flows that were delivered without signaling to a "best-effort" network, will now pass through the traffic policer which allow them to access a higher service class.

In a preferred characterizing embodiment of the present invention, said resource usage comprises, at least, the bandwidth level of said data packet flow.

Further characterizing embodiments of the present traffic policer are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
**Fig. 1** represents a progressive traffic policer according to the invention and to be used in a telecommunication data packet network;
**Fig. 2** shows a data packet flow of which the resource usage is controlled by the progressive traffic policer of Fig. 1; and
**Fig. 3** represents the progressive traffic policer of Fig. 1 in more detail.

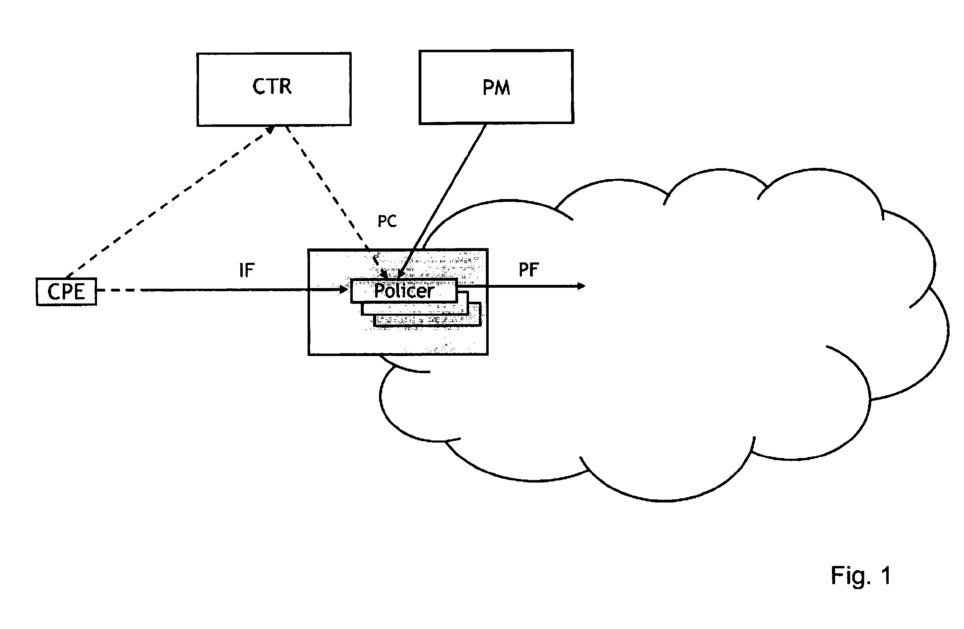

The traffic policer shown at Fig. 1 is used to configure the maximum resources that may be used by a data packet flow IF generated by a source, e.g. a Customer Premise Equipment CPE, and intended to enter a telecommunication data packet network.

The object of the traffic policer is to limit the resource usage, i.e. generally but not exclusively the bandwidth, of the data flow entering the data packet network to a predetermined maximum tolerated resource usage value.

To this end, the traffic policer is initialized with a certain set of parameters such as the maximum bandwidth level of the data packet flow, but which could also be a combination of token rate, token bucket depth, variability of the traffic and/or service mix constituting the resource usage with which the maximum tolerated resource usage of a data packet flow is configured at the set-up time of a new session.

Bandwidth is basically defined as the number of bits transported during a measurement period. For packet based traffic, the bandwidth BW can vary substantially depending on the chosen measurement window. Multiple measurement windows might be considered to characterize the traffic and control the delivery. In case of a token bucket mechanism, also the token bucket depth can be tuned. Token bucket depth is a measure of variability of the service.

The initial resource usage value of the maximum tolerated resource usage is for instance provided by the Customer Premise Equipment CPE generating the data packet flow IF and coupled to the policer via a network controller CTR. The initial resource usage value of the maximum tolerated resource usage may also be a fixed default value or it may be provided by a network policy manager PM and is then based on actual measurements on available resources in the network.

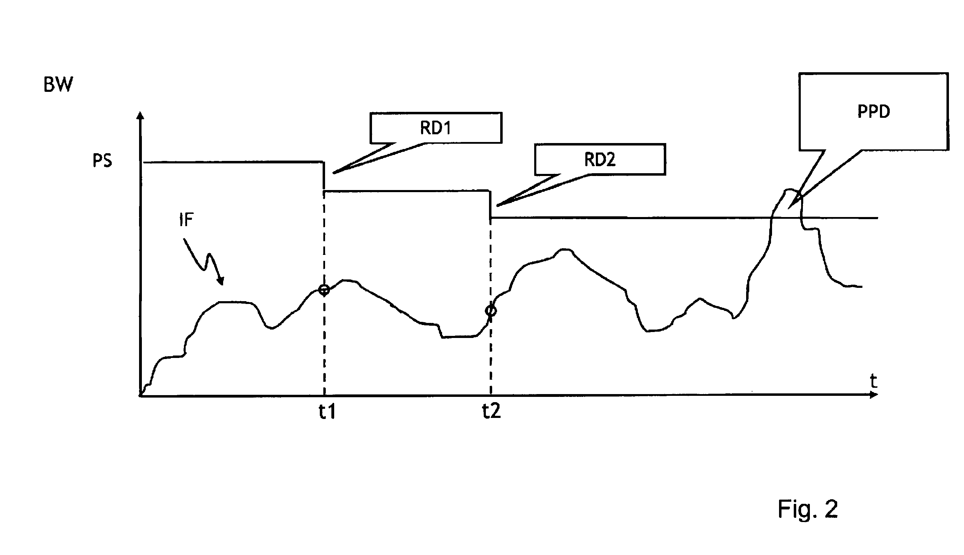

The initial maximum tolerated resource usage value is indicated by PS at Fig. 2 that shows an example of the bandwidth BW or resources used by a data packet flow IF in function of the time t.

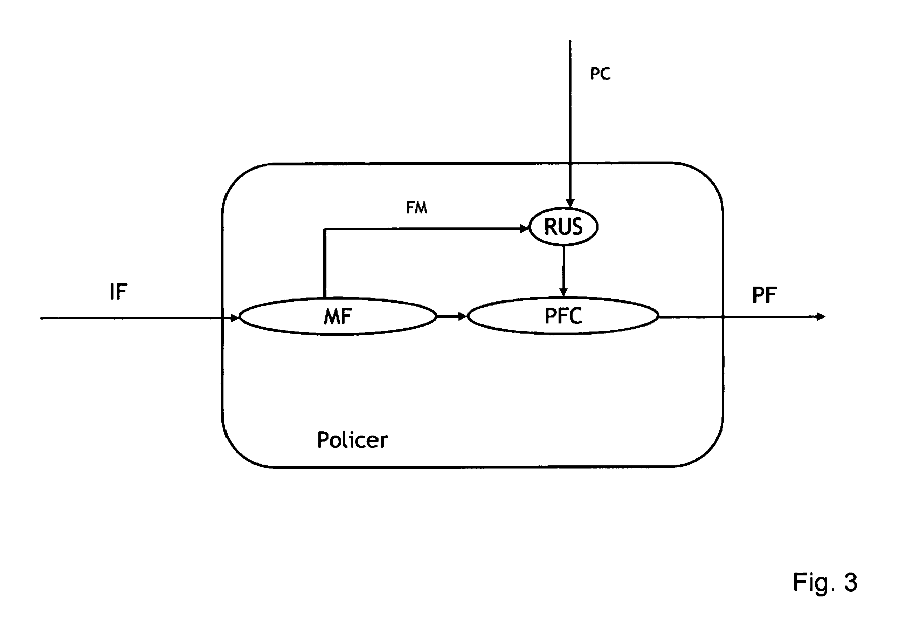

The traffic policer of the present invention, shown in more detail at Fig. 3, is a dynamic or progressive traffic policer that gradually decreases maximum tolerated resource usage value if the traffic flowing through it is lower than what it is configured to allow. To keep the initial maximum tolerated resource usage value, the Customer Premise Equipment CPE should regularly send at this rate, otherwise this maximum tolerated resource usage value is adapted, i.e. decreased. This function of the traffic policer assures that the CPE is not sending more/ faster than the network is expecting.

As shown at Fig. 3, the traffic policer comprises measurement means MF for receiving the data packet flow IF generated by the Customer Premise Equipment CPE and provided at a data input of the traffic policer. These measurement means MF measure the current resource usage of the incoming data packet flow IF and transmit it to a police flow controller PFC also included in the traffic policer and configured to limit the resource usage of the data packet flow IF to a predetermined resource usage value. The configured, or limited, data packet flow PF is then provided by the police flow controller PFC to the telecommunication data packet network via a data output of the traffic policer.

The measurement means MF measure the current resource usage of the incoming data packet flow IF at predetermined time intervals t1, t2 and provide the measured resource usage FM to resource usage setting means RUS also included in the traffic policer. Based on the measured resource usage FM, the resource usage setting means RUS calculates a new maximum tolerated resource usage value and provides it to the police flow controller PFC as a new predetermined maximum tolerated resource usage value.

It is to be noted that the resource usage setting means RUS may calculate a new maximum tolerated resource usage value based on an average of the measured resource usage FM performed over several time intervals.

It is also to be noted that the resource usage setting means RUS also stores the fixed default resource usage value as initial maximum tolerated resource usage or receives this initial value from the Customer Premise Equipment CPE via the network controller CTR and/or from the network policy manager PM.

When during one or more time intervals the current measured resource usage or bandwidth level is substantially lower than the configured maximum tolerated resource usage of the traffic policer, this maximum tolerated resource usage value is adapted to a lower level.

In more detail, when the measured resource usage remains below the previous (initial or adapted) maximum tolerated resource usage value during one or more time intervals, the police flow controller PFC of the traffic policer reduces the current maximum tolerated resource usage value to a lower maximum tolerated resource usage value.

In case of non compliance, i.e. if the data packet flow temporarily exceeds the new predetermined resource usage value, some traffic PPD may be dropped by the traffic policer. The traffic policer may then degrade the priority of the traffic or inform the source of the traffic flow at the CPE to decrease the traffic volume. These potential consequent actions may be performed when out of profile traffic is detected.

The amount of resource usage RD1, RD2 by which the maximum tolerated resource usage value PS will be reduced is determined by the progressive traffic policer. The traffic policer also determines which observation interval(s) should be used and which other parameters need to be taken into account, e.g. variability of the traffic or service mix.

The restrictive behavior of the progressive traffic policer is preferably set by the network policy manager PM. As an example, if resource usage of the data packet flow IF is reduced to 75% of its previous value for 10 minutes, the traffic policer will reduce the maximum tolerated resource usage value by 10%.

It is to be noted that for adaptive flows and in case of congestion, the progressive traffic policer could be requested, e.g. by the policy manager PM, to reduce the maximum tolerated resource usage or bandwidth. As a result the traffic source at the CPE could be requested by the traffic policers to reduce the consumed resource usage or bandwidth for the service.

In more detail, for adaptive flows or sessions, the traffic sources at the CPE will adapt the traffic level to the availability of the network resources. In this case, only the place at which the bits are transported is impacted, the flow or session will be an elastic flow. A practical example is the behavior of a TCP session in case of congestion. An alternative approach is to reduce the number of bits to be transported. A practical example of this behavior is the use of Scalable Video Codecs (SVC). In this last case an SVC enhancement layer could be dropped to deal with congestion.

It is finally to be noted that, since the traffic characteristics are known, a data packet flow session could be evaluated on its friendliness to the use of network resources and could be billed accordingly.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A traffic policer adapted to configure to a predetermined resource usage value the maximum tolerated resource usage of a data packet flow (IF) entering in a telecommunication data packet network,
***characterized in that*** said traffic policer is adapted to measure the current resource usage of said data packet flow and to reduce said predetermined resource usage value to a new predetermined resource usage value, lower than the first mentioned predetermined resource usage value, when the measured resource usage is below said maximum tolerated resource usage.

2. The traffic policer according to claim 1, ***characterized in that*** said traffic policer is adapted to measure (MF) said resource usage at predetermined time intervals.

3. The traffic policer according to claim 2, ***characterized in that*** said traffic policer is adapted to reduce (PFC) the predetermined resource usage value when the measured resource usage remains below said maximum tolerated resource usage during a plurality of said predetermined time intervals.

4. The traffic policer according to claim 1, ***characterized in that*** said traffic policer is further adapted to determine the amount of resource usage (RD1, RD2) by which the predetermined resource usage value has to be reduced.

5. The traffic policer according to claim 1, ***characterized in that*** said traffic policer comprises measurement means (MF) adapted to measure said current resource usage of the data packet flow (IF) and a police flow controller (PFC) coupled to said measurement means and adapted to limit the resource usage of said data packet flow to said new predetermined resource usage value.

6. The traffic policer according to claim 5, ***characterized in that*** said traffic policer further comprises resource usage setting means (RUS) adapted to receive said measured resource usage (FM) from said measurement means (MF), to calculate said new predetermined resource usage value according to said measured resource usage and to provide said new predetermined resource usage value to said police flow controller (PFC).

7. The traffic policer according to claim 6, ***characterized in that*** said resource usage setting means (RUS) is further adapted to receive the predetermined resource usage value of said maximum tolerated resource usage from a Customer Premise Equipment CPE generating said data packet flow (IF).

8. The traffic policer according to claim 6, ***characterized in that*** said resource usage setting means (RUS) is further adapted to receive the predetermined resource usage value of said maximum tolerated resource usage from a policy manager (PM) of said telecommunication data packet network.

9. The traffic policer according to claim 1, ***characterized in that*** said resource usage comprises the bandwidth level of said data packet flow.

10. The traffic policer according to claim 9, ***characterized in that*** said resource usage further comprises other parameters of said data packet flow such as the variability of the traffic or service mix.
